# EUROPEAN PATENT SPECIFICATION

(11) **EP 2 495 027 B1**
(45) Date of publication and mention of the grant of the patent: **14.05.2014**
(21) Application number: 12156007.2
(22) Date of filing: 17.02.2012
(51) Int. Cl.: B01D 46/24

(54) **Honeycomb structure and exhaust gas purification device**
Wabenstruktur und Abgasreinigungsvorrichtung
Structure en nid d'abeille et dispositif de purification de gaz d'échappement

(30) Priority: 03.03.2011 JP 2011046356
(43) Date of publication of application: 05.09.2012
(73) Proprietor: NGK Insulators, Ltd., Nagoya-shi, Aichi 467-8530 (JP)
(72) Inventor: Miyairi, Yukio, Nagoya-shi, Aichi 467-8530 (JP)
(74) Representative: Paget, Hugh Charles Edward

(56) References cited:
- EP-A1- 1 857 427
- EP-A1- 2 380 650

## Description

### BACKGROUND OF THE INVENTION

### Field of the Invention

The present invention relates to a honeycomb structure and an exhaust gas purification device. More particularly, it relates to a honeycomb structure which can suitably remove (collect) a particulate matter contained in an exhaust gas discharged from a direct-injection gasoline engine, so that a pressure loss increases less when the particulate matter in the exhaust gas is removed, and which can maintain a suitable collecting efficiency of the particulate matter for a long period of time, and also relates to an exhaust gas purification device.

### Background Art

From the viewpoints of environmental protection and resource saving, the reduction of fuel consumptions of automobiles have been required. As to gasoline engines for use mainly in passenger cars, fuel direct injection has been proceeded for the improvement of fuel efficiency.

Heretofore, in the gasoline engines, a suction port fuel injection system has been employed. Therefore, less soot (a particulate matter: PM) is generated, which hardly raises a problem. However, in the case of a fuel direct injection type gasoline engine, the amount of the PM to be generated is large as compared with the suction port fuel injection, and a measure for preventing the generated PM from being discharged to the atmosphere has been required.

On the other hand, as a collecting filter for removing the particulate matter discharged from a diesel engine, a honeycomb structure is used. As the honeycomb structure for use as the particulate matter collecting filter, there has been used a plugged honeycomb structure including plugged portions at predetermined positions in both end surfaces (e.g., see Patent Document 1). The plugged honeycomb structure includes a honeycomb structure part including porous partition walls arranged to partition a plurality of cells which become through channels of a fluid and an outer peripheral wall positioned in an outermost periphery, and the plugged portions arranged at the ends of the predetermined cells on an inlet side of the fluid and at the ends of the remaining cells on an outlet side of the fluid. Moreover, in the plugged honeycomb structure, the predetermined cells and the remaining cells are alternately arranged to form a so-called checkered pattern. The fluid is an exhaust gas or a purified gas. According to such a plugged honeycomb structure, the exhaust gas flows into the cells through an inlet-side end surface, the exhaust gas flowing into the cells passes through the partition walls, and the exhaust gas (the purified gas) passing through the partition walls is discharged through an end surface on the outlet side of the exhaust gas. When the exhaust gas passes through the partition walls, a PM contained in the exhaust gas is collected by the partition walls, and the exhaust gas becomes the purified gas.

Consequently, there is considered a method of using the above-mentioned plugged honeycomb structure for use in removing the particulate matter discharged from the diesel engine, to remove the particulate matter discharged from the gasoline engine.

### Prior Art Document

### Patent Document

[Patent Document 1] JP-A-2003-254034

### SUMMARY OF THE INVENTION

However, a ternary catalyst converter, an NOₓ adsorber reduction catalyst and the like have heretofore been used to treat an exhaust gas discharged from a gasoline engine. Furthermore, it is considered that when the above plugged honeycomb structure is mounted on an exhaust system (an exhaust path), a pressure loss of the exhaust system increases, which causes a problem such as the deterioration of an engine output.

Moreover, it is considered that a ternary catalyst loaded onto partition walls of the plugged honeycomb structure is replaced with the above ternary catalyst converter, the NOₓ adsorber reduction catalyst or the like. However, in the plugged honeycomb structure, all the exhaust gas which has flowed into the structure passes through the partition walls, and most of a particulate matter such as ash (an ash content) in the exhaust gas is collected by the partition walls. Therefore, a pressure loss easily increases. In particular, when a large amount of a substance which becomes the ash content is contained in an engine oil or a large amount of impurities are contained in a fuel, a large amount of the particulate matter is contained in the exhaust gas discharged from the engine. Consequently, there has been a problem that the pressure loss increases.

Furthermore, the gasoline engine is different from a diesel engine in fuel for use, and hence the engine is also different in particle diameters, shape and component of the PM in the exhaust gas in addition to the amount of the PM in the exhaust gas. Therefore, the gasoline engine is also different from the diesel engine in optimum constitution (characteristics) of the honeycomb structure for collecting the PM in the exhaust gas. In consequence, there is a problem that it is difficult to use the plugged honeycomb structure (the filter) for the diesel engine as it is, as a gasoline engine filter.

The present invention has been developed in view of such problems of a conventional technology, and an object thereof is to provide a honeycomb structure which can suitably remove a particulate matter contained in an exhaust gas discharged from a direct-injection gasoline engine, so that a pressure loss increases less when the particulate matter in the exhaust gas is removed, and which can maintain a suitable collecting efficiency of the particulate matter contained in the exhaust gas for a long period of time, and to provide an exhaust gas purification device.

The document EP 1 857 427 A1 describes a honeycomb filter having plugged and unplugged flow-through cells.

According to the present invention, there are provided a honeycomb structure and an exhaust gas purification device as follows.

A honeycomb structure comprising porous partition walls arranged to partition a plurality of cells which extend through the structure from an inflow end surface as the end surface on a fluid inflow side to an outflow end surface as the end surface on a fluid outflow side to become through channels of the fluid and in which a shape of outer peripheral edges of open frontal areas in the inflow end surface is a quadrangular shape; and plugged cells as the cells which are provided with plugged portions at ends thereof on the side of the inflow end surface and flow-through cells as the cells which are not provided with the plugged portions, wherein among the cells adjacent to each of the flow-through cells via the partition walls, two or less cells are the plugged cells.

The honeycomb structure according to the above [1], wherein when the plurality of cells adjacent via the partition walls constitute one unit cell, the plugged portions are alternately arranged in the adjacent unit cells.

The honeycomb structure according to the above [2], wherein the unit cell includes four cells of two columns and two rows which are adjacent to one another.

The honeycomb structure according to the above [2], wherein the unit cell includes all the cells of one column which are adjacent via the partition walls.

The honeycomb structure according to the above [2], wherein the unit cell includes all the cells of a plurality of columns adjacent to one another.

An exhaust gas purification device comprising the honeycomb structure according to any one of the above [1] to [5]; and a can member provided with an inflow port through which the fluid flows into the can member and an outflow port through which the fluid flows out of the can member and in which the honeycomb structure is put in a state where the inflow end surface of the structure faces the side of the inflow port and the outflow end surface thereof faces the side of the outflow port.

A honeycomb structure of the present invention includes: porous partition walls arranged to partition a plurality of cells which extend through the structure from an inflow end surface as the end surface on a fluid inflow side to an outflow end surface as the end surface on a fluid outflow side to become through channels of the fluid and in which a shape of outer peripheral edges of open frontal areas in the inflow end surface is a quadrangular shape; and plugged cells as the cells which are provided with plugged portions at ends thereof on the side of the inflow end surface and flow-through cells as the cells which are not provided with the plugged portions, wherein among the cells adjacent to each of the flow-through cells via the partition walls, the plugged cells are two or less cells. Therefore, when the exhaust gas passes through the honeycomb structure (specifically, when the fluid flows from the flow-through cells to the plugged cells), the partition walls become a filter to suitably remove (collect) a particulate matter contained in an exhaust gas. As described above, it is possible to suitably remove the particulate matter contained in the exhaust gas. Moreover, the flow-through cells are formed, and hence a pressure loss increases less. Furthermore, the honeycomb structure of the present invention includes the plugged cells as the cells which are provided with the plugged portions at ends thereof on the inflow end surface side and the flow-through cells as the cells which are not provided with the plugged portions. Among the cells adjacent to each of the flow-through cells via the partition walls, the plugged cells are two or less cells. Therefore, the flow-through cells are not easily closed with the particulate matter deposited on the inflow end surface. It is possible to maintain a suitable collecting efficiency of the particulate matter in the exhaust gas for a long period of time.

An exhaust gas purification device of the present invention includes the honeycomb structure of the present invention, and this honeycomb structure is put in a can member "in a state where an inflow port through which the fluid flows into the can member and an outflow port through which the fluid flows out of the can member are formed, and the inflow end surface faces the side of the inflow port and the outflow end surface faces the side of the outflow port". Therefore, when the exhaust gas passes through the honeycomb structure (specifically, when the fluid flows from the flow-through cells to the plugged cells), the partition walls become the filter to suitably remove (collect) the particulate matter contained in the exhaust gas. As described above, it is possible to suitably remove the particulate matter contained in the exhaust gas. Moreover, the flow-through cells are formed, and hence the pressure loss increases less. Furthermore, in the honeycomb structure of the exhaust gas purification device of the present invention, the flow-through cells are not easily closed with the particulate matter deposited on the inflow end surface. Therefore, in the exhaust gas purification device of the present invention, it is possible to maintain the suitable collecting efficiency of the particulate matter in the exhaust gas for the long period of time.

### BRIEF DESCRIPTION OF THE DRAWING

Fig. 1 is a perspective view schematically showing an embodiment of a honeycomb structure of the present invention;
Fig. 2 is a plan view schematically showing an inflow end surface of the honeycomb structure shown in Fig. 1;
Fig. 3 is a plan view schematically showing a honeycomb structure in which adjacent cells are alternately provided with plugged portions;
Fig. 4 is a schematic view showing a state of the honeycomb structure through which an exhaust gas flows;
Fig. 5 is a schematic view showing a state of the honeycomb structure through which the exhaust gas flows;
Fig. 6 is a plan view schematically showing an inflow end surface of another embodiment of the honeycomb structure of the present invention;
Fig. 7 is a plan view schematically showing an inflow end surface of still another embodiment of the honeycomb structure of the present invention;
Fig. 8 is a plan view schematically showing an inflow end surface of a further embodiment of the honeycomb structure of the present invention; and
Fig. 9 is a schematic view showing an embodiment of an exhaust gas purification device of the present invention and showing a cross section which is parallel to a fluid flowing direction.

### DESCRIPTION OF THE PREFERRED EMBODIMENTS

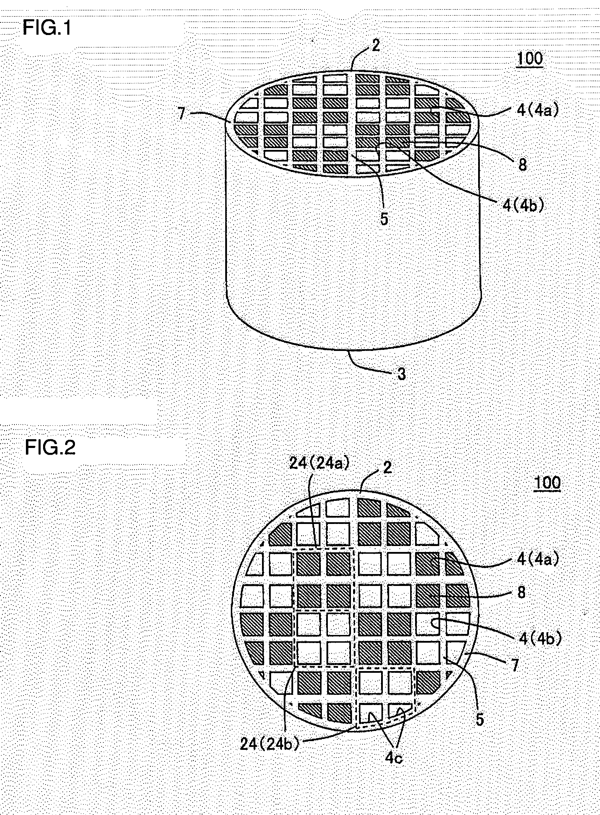

Hereinafter, embodiments of the present invention will be described, but it should be understood that the present invention is not limited to the following embodiments and that the scope of the present invention also includes the following embodiments to which changes, improvements and the like are suitably added on the basis of ordinary knowledge of a person skilled in the art without departing from the scope of the present invention.
[1] Honeycomb Structure:
   An embodiment of a honeycomb structure of the present invention, as in a honeycomb structure 100 shown in Fig. 1 and Fig. 2, includes porous partition walls 5 arranged to partition a plurality of cells 4 which extend through the structure from an inflow end surface 2 as the end surface on an inflow side of a fluid (an exhaust gas G) to an outflow end surface 3 as the end surface on a fluid outflow side to become through channels of the fluid and in which a shape of outer peripheral edges of open frontal areas in the inflow end surface 2 is a quadrangular shape. The honeycomb structure 100 includes plugged cells 4a as the cells 4 which are provided with plugged portions 8 at ends thereof on the side of the inflow end surface 2 and flow-through cells 4b as the cells 4 which are not provided with the plugged portions 8. Furthermore, in the honeycomb structure 100, among the cells 4 adjacent to each of the flow-through cells 4b via the partition walls 5, the plugged cells 4a are two or less cells.

Such a honeycomb structure includes the porous partition walls 5 arranged to partition the plurality of cells 4 which extend through the structure from the inflow end surface 2 as the end surface on the fluid (the exhaust gas G) inflow side to the outflow end surface 3 as the end surface on the fluid outflow side to become the through channels of the fluid and in which the shape of the outer peripheral edges of the open frontal areas in the inflow end surface 2 is the quadrangular shape. Moreover, the honeycomb structure includes the plugged cells 4a as the cells 4 which are provided with the plugged portions 8 at ends thereof on the side of the inflow end surface 2 and the flow-through cells 4b as the cells 4 which are not provided with the plugged portions 8. Furthermore, among the cells 4 adjacent to each of the flow-through cells 4b via the partition walls 5, the plugged cells 4a are two or less cells. Therefore, when the exhaust gas passes through the honeycomb structure 100 (specifically, when the exhaust gas passes from the flow-through cells 4b to the plugged cells 4a), the partition walls 5 become a filter to suitably remove (collect) a particulate matter contained in the exhaust gas. As described above, it is possible to suitably remove the particulate matter contained in the exhaust gas. Moreover, the flow-through cells 4b are formed. Therefore, a pressure loss increases less. Furthermore, the honeycomb structure 100 includes the plugged cells 4a as the cells 4 which are provided with the plugged portions 8 at ends thereof on the inflow end surface 2 side and the flow-through cells 4b as the cells 4 which are not provided with the plugged portions 8. Among the cells 4 adjacent to each of the flow-through cells 4b via the partition walls 5, the number of the plugged cells 4a is two or less. Therefore, the flow-through cells 4b are not easily closed with the particulate matter deposited on the inflow end surface 2.
It is possible to maintain a suitable collecting efficiency of the particulate matter in the exhaust gas for a long period of time. It is to be noted that the plugged cells 4a of the honeycomb structure 100 shown in Fig. 1 are provided with the plugged portions 8 only at the ends thereof on the inflow end surface 2 side, and are not provided with the plugged portions 8 at the ends thereof on the outflow end surface 3 side.

Fig. 1 is a perspective view schematically showing the embodiment of the honeycomb structure of the present invention. Fig. 2 is a plan view schematically showing the inflow end surface of the honeycomb structure shown in Fig. 1.

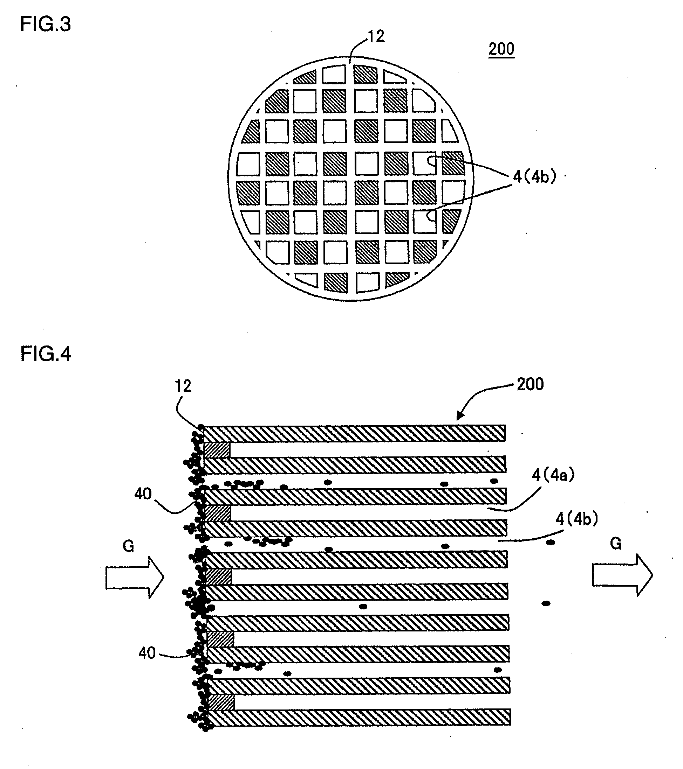

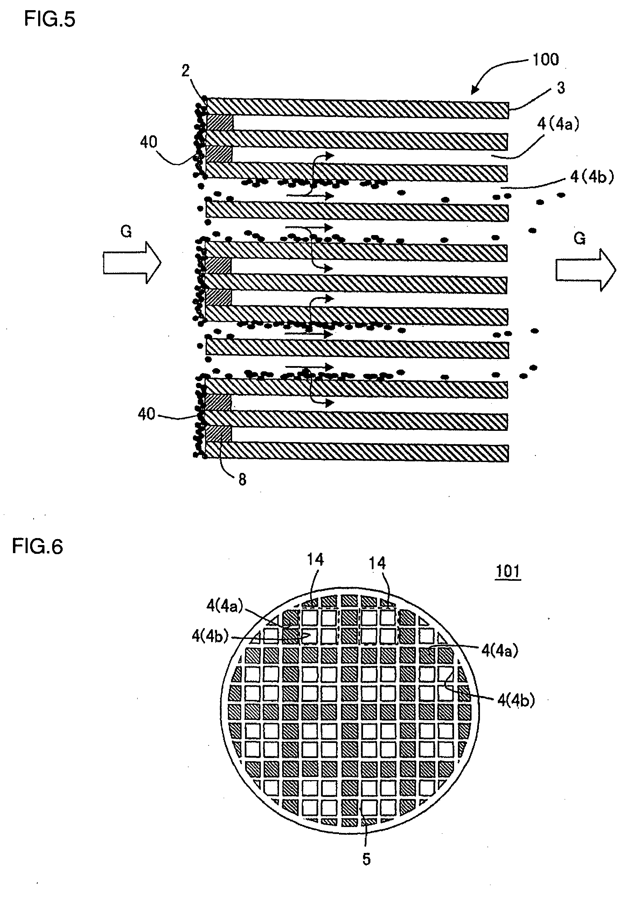

Fig. 3 is a plan view schematically showing a honeycomb structure in which adjacent cells are alternately provided with plugged portions. When a honeycomb structure 200 shown in Fig. 3 is used in an exhaust gas purification device, a particulate matter 40 in the exhaust gas is accumulated on the surface of an inflow end surface 12 of the honeycomb structure 200. When a predetermined or larger amount of the particulate matter is accumulated, the particulate matter can be discharged through the flow-through cells 4b owing to a momentum of the exhaust gas. However, owing to a use situation such as use for a long period of time, the particulate matter 40 accumulated on the surface of the inflow end surface 12 of the honeycomb structure 200 is not discharged, to close inlets of the flow-through cells 4b sometimes, as shown in Fig. 4. Thus, in the honeycomb structure 200 shown in Fig. 3, the inlets of the flow-through cells 4b are closed with the accumulated particulate matter 40, and clogging occurs, owing to the use for the long period of time or the like. On the other hand, in the honeycomb structure of the present invention, the plugged cells 4a are two or less cells, among the cells 4 adjacent to each of the flow-through cells 4b via the partition walls 5, as shown in Fig. 2. Therefore, the inlets of the flow-through cells 4b are not easily closed with the accumulated particulate matter 40, regardless of a use situation such as the use for the long period of time. It is to be noted that as shown in Fig. 5, part of the exhaust gas flows into the honeycomb structure of the present invention from each of the flow-through cells 4b to the plugged cells 4a adjacent to the flow-through cell 4b. At this time, the particulate matter 40 in the exhaust gas is caught by the honeycomb structure 100 (the surfaces of the partition walls 5 of the honeycomb structure 100). Afterward, combustible particles of soot and the like in the particulate matter 40 are burned, and non-combustible particles of ash and the like are removed (discharged).

As shown in Fig. 1, the honeycomb structure 100 includes the porous partition walls 5 arranged to partition the plurality of cells 4 which extend through the structure from the inflow end surface 2 as the end surface on the inflow side of the exhaust gas G to the outflow end surface 3 as the end surface on the outflow side of the exhaust gas G, to become the through channels of the fluid. Moreover, the honeycomb structure 100 further includes an outer peripheral wall 7 disposed in an outer periphery thereof, as shown in Fig. 2. It is to be noted that the honeycomb structure does not necessarily have to include the outer peripheral wall 7.

Porosities of the partition walls 5 are preferably from 35 to 70%, further preferably from 35 to 65%, and especially preferably from 38 to 50%. When the porosities of the partition walls are in the above range, it is possible to suitably prevent the increase of the pressure loss while appropriately maintaining a strength of the honeycomb structure. The porosities of the partition walls 5 are values measured with a mercury porosimeter.

Thicknesses of the partition walls 5 are preferably from 0.05 to 0.175 mm, further preferably from 0.05 to 0.1 mm, and especially preferably from 0.05 to 0.075 mm. When the thicknesses of the partition walls are in the above range, it is possible to suitably prevent the increase of the pressure loss even in a case where the structure is used as the filter for a direct-injection gasoline engine. The thicknesses of the partition walls 5 are values measured by a method of observing a cross section parallel to a central axis with a microscope.

A cell density of the honeycomb structure 100 (the number of cells per unit area in the cross section of the structure which is orthogonal to a cell extending direction) is preferably from 62 to 92 cells/cm², further preferably from 62 to 85 cells/cm², and especially preferably from 62 to 80 cells/cm². When the cell density is in the above range, it is possible to suitably prevent the increase of the pressure loss.

An average pore diameter of the partition walls 5 is preferably from 5 to 50 μm, further preferably from 7 to 30 μ m, and especially preferably from 10 to 25 μm. When the average pore diameter is in the above range, it is possible to suitably catch the particulate matter while suitably preventing the increase of the pressure loss. The average pore diameter of the partition walls 5 is a value measured with the mercury porosimeter.

A value (L/D) calculated by a formula: (a length L of the honeycomb structure in a central axis direction/ diameter D of the inflow end surface of the honeycomb structure) is preferably from 0.3 to 2.0, further preferably from 0.3 to 1.0, and especially preferably from 0.3 to 0.8. When the above value (L/D) is in the above range, it is possible to suitably prevent the increase of the pressure loss.

The cells 4 become the through channels of the fluid, and a shape of the outer peripheral edges of the open frontal areas of the cells in the inflow end surface is a quadrangular shape, i.e., the quadrangular shape in the cross section of the structure which is orthogonal to the cell extending direction. It is to be noted that when the shape of the outer peripheral edges of the open frontal areas of the cells in the inflow end surface is the quadrangular shape, there is not any special restriction on a shape of outer peripheral edges of open frontal areas of the cells in the outflow end surface. Examples of the shape include a triangular shape, a quadrangular shape, a polygonal shape such as an octagonal shape, a round shape and an elliptic shape.

There is not any special restriction on a thickness of the outer peripheral wall 7, but the thickness is preferably from 0.2 to 2.0 mm. When the thickness of the outer peripheral wall 7 is in the above range, it is possible to prevent the increase of the pressure loss while appropriately maintaining the strength of the honeycomb structure.

There is not any special restriction on a shape of the honeycomb structure 100, but the shape is preferably a cylindrical shape, a tubular shape with an elliptic bottom surface, a polygonal tubular shape with a quadrangular, pentangular or hexagonal bottom surface or the like, and further preferably the cylindrical shape. Moreover, there is not any special restriction on a size of the honeycomb structure 100, but the length of the structure in the cell extending direction is preferably from 30 to 200 mm. In addition, when the outer shape of the honeycomb structure 100 is, for example, a cylindrical shape, a diameter of the bottom surface thereof is preferably from 80 to 180 mm.

The partition walls 5 and the outer peripheral wall 7 preferably contain a ceramic as a main component. Specifically, a material of the partition walls 5 and the outer peripheral wall 7 is preferably at least one selected from the group consisting of silicon carbide, a silicon-silicon carbide composite material, cordierite, mullite, alumina, spinel, a silicon carbide-cordierite composite material, lithium aluminum silicate, and aluminum titanate. Among these materials, cordierite is preferable because the material has a small thermal expansion coefficient and is excellent in thermal shock resistance. The material of the partition walls 5 and the outer peripheral wall 7 is preferably the same, but may be different. Moreover, when it is described that the walls "contain the ceramic as the main component", the ceramic is contained as much as 90 mass% or more of the whole material.
[1-1] Plugged Portion:
   As described above, the honeycomb structure 100 include the plugged cells 4a and the flow-through cells 4b, and among the cells 4 adjacent to each of the flow-through cells 4b via the partition walls 5, the plugged cells 4a are two or less cells. In other words, when the plugged cells 4a are adjacent to the flow-through cell 4b via the partition walls, the number of the adjacent plugged cells 4a is two or less. When the plugged cells 4a and the flow-through cells 4b are arranged in this manner, it is possible to prevent the increase of the pressure loss. Specifically, when an exhaust gas purification device including the honeycomb structure 100 is used for a long period of time, it is possible to prevent the increase of the pressure loss caused by accumulating the particulate matter 40 on the surface of the inflow end surface 2 of the honeycomb structure 100 to close the inlets of the flow-through cells 4b. That is, when the exhaust gas purification device including, for example, the honeycomb structure 100 is used for a long period of time, the particulate matter 40 in the exhaust gas is accumulated on the surface of the inflow end surface 2 of the honeycomb structure 100, and protrudes to open portions of the flow-through cells 4b sometimes. However, the particulate matter 40 protruding to the open portions of the flow-through cells 4b protrudes through two or less partition walls among the partition walls 5 arranged to partition the flow-through cells 4b. Therefore, in the honeycomb structure 100, an open area of each of the flow-through cells 4b decreases sometimes owing to the accumulation of the particulate matter 40, but a ratio of the decrease is smaller than in the honeycomb structure 200 shown in Fig. 3 and Fig. 4. Therefore, it is possible to prevent the increase of the pressure loss.

Fig. 6 is a plan view schematically showing an inflow end surface of another embodiment of the honeycomb structure of the present invention. A honeycomb structure 101 shown in Fig. 6 includes plugged cells 4a and flow-through cells 4b, and among cells 4 adjacent to each of the flow-through cells 4b via partition walls 5, the plugged cells 4a are two or less cells in this example. Specifically, the honeycomb structure 101 is the example where when the plurality of flow-through cells 4b adjacent via the partition walls 5 constitute one unit cell 14, the cells 4 adjacent to the cells 4 constituting the unit cell 14 are the plugged cells 4a. When such a honeycomb structure is used in the exhaust gas purification device, it is possible to prevent the increase of the pressure loss. Moreover, a ratio of the plugged cells 4a to the flow-through cells 4b increases, and hence an exhaust gas flow rate through the plugged cells 4a increases owing to a pressure balance. That is, an amount of the exhaust gas passing through the partition walls 5 increases. Therefore, a collecting efficiency of the particulate matter enhances.

Moreover, there is not any special restriction on an arrangement state of the plugged cells 4a and the flow-through cells 4b as long as the plugged cells 4a and the flow-through cells 4b are arranged as described above. When the plurality of cells 4 adjacent via the partition walls 5 constitute one unit cell 24 as in the honeycomb structure 100 shown in Fig. 2, the plugged portions 8 are preferably alternately arranged in the adjacent unit cells 24. That is, the adjacent unit cells 24 are preferably provided with the plugged cells 4a and the flow-through cells 4b as in the honeycomb structure 100 shown in Fig. 2. Here, the plurality of plugged cells 4a adjacent via the partition walls 5 constitute one unit cell 24a, and the plurality of flow-through cells 4b adjacent via the partition walls 5 constitute one unit cell 24b. In the honeycomb structure 100 shown in Fig. 2, the unit cell 24a including the plurality of plugged cells 4a and the unit cell 24b including the plurality of flow-through cells 4b are alternately arranged to form a so-called checkered pattern. Here, the unit cell 24 preferably include four cells of two columns and two rows which are adjacent to one another. "The unit cell 24 includes four cells of two columns and two rows which are adjacent to one another" means that the unit cell 24 includes four cells including two cells 4 adjacent via the partition wall 5 and two cells 4 adjacent to both of these two cells 4 and adjacent to each other via the partition wall 5. The honeycomb structure 100 shown in Fig. 2 is an example where when four cells 4 of two columns and two rows which are adjacent to one another constitute one unit cell 24, the plugged portions 8 are alternately arranged in the adjacent unit cells 24. In an exhaust gas purification device including the honeycomb structure 100, it is possible to prevent the increase of the pressure loss. That is, in the above exhaust gas purification device, when a particulate matter such as ash is deposited on the exhaust gas inflow end surface of the honeycomb structure, openings of the cells are not easily closed with the accumulated particulate matter which overflows on a flow-through cell side, whereby it is possible to prevent the increase of the pressure loss. It is to be noted that in the present description, when lacking cells 4c cut by the outer peripheral wall 7 are present in an outer peripheral portion of the honeycomb structure 100 as shown in Fig. 2, a cell group formed by combining the cells cut by the outer peripheral wall 7 and the lacking cells 4c constitutes the unit cell 24. Therefore, the number of the cells 4 constituting the unit cell 24 does not have to be predetermined (four in the honeycomb structure 100 shown in Fig. 2). It is to be noted that the cells 4 positioned at an outermost periphery have a shape along the outer peripheral wall 7.

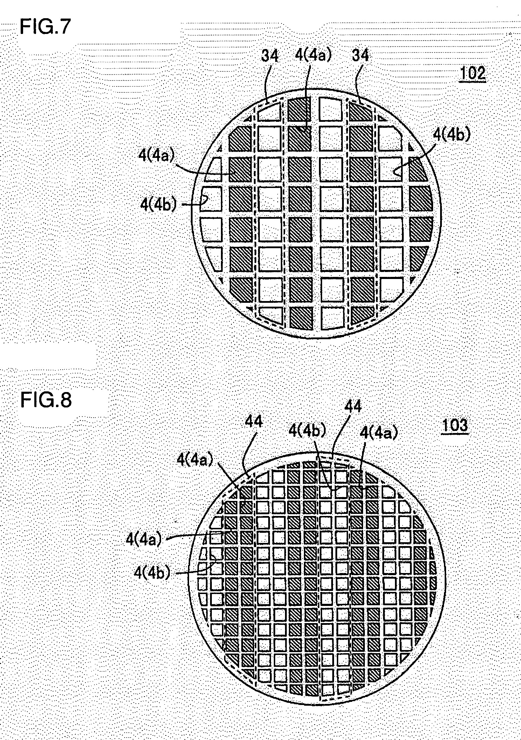

In a honeycomb structure 102 shown in Fig. 7, when a plurality of cells 4 adjacent via partition walls 5 constitute one unit cell 34, plugged portions 8 are alternately arranged in the adjacent unit cells 34, and the unit cell 34 includes all the cells 4 of one column. That is, in the honeycomb structure 102, plugged cells 4a and flow-through cells 4b are alternately arranged every adjacent unit cell 34, and the unit cell 34 includes all the cells 4 of the column. "The unit cell 34 includes all the cells 4 of one row which are adjacent via the partition walls" means that the unit cell 34 includes the plurality of cells as follows. That is, it is meant that the unit cell 34 includes "a plurality of cells adjacent via the partition walls 5 so that the cells 4 positioned at both ends of the unit cell 34 are positioned in the outermost periphery of the honeycomb structure 102 and so that the cells are arranged in one column from the cell 4 positioned at one end to the cell 4 positioned at the other end". "The cells 4 positioned at both the ends of the unit cell 34 are positioned in the outermost periphery of the honeycomb structure 102" means that the cells 4 positioned at both the ends of the unit cell 34 are partitioned by walls including the outer peripheral wall 7. In an exhaust gas purification device including the honeycomb structure 102, when ash is deposited on an exhaust gas inflow end surface of the honeycomb structure, openings of the cells are not easily closed with the accumulated ash which overflows on a flow-through cell side, and it is possible to prevent the increase of a pressure loss.

In a honeycomb structure 103 shown in Fig. 8, when a plurality of cells 4 adjacent via partition walls 5 constitute one unit cell 44, plugged portions 8 are alternately arranged in the adjacent unit cells 44, and the unit cell 44 includes all the cells of a plurality of adjacent columns (two columns). That is, in the honeycomb structure 103, plugged cells 4a and flow-through cells 4b are alternately arranged every adjacent unit cell 44, and the unit cell 44 includes all the cells of the plurality of adjacent columns (two columns). "The unit cell 44 includes all the cells of the plurality of adjacent columns" means that the unit cell 44 includes the plurality of cells as follows. Here, a plurality of cells adjacent via the partition walls 5 so that the cells are arranged in one column from the cell 4 positioned at one end to the cell 4 positioned at the other end constitute a cell group. It is meant that the unit cell 44 includes "the plurality of cells having a constitution where the cells 4 positioned at both the ends of the unit cell 44 are positioned in the outermost periphery of the honeycomb structure 103, the plurality of cell groups are provided and the plurality of cell groups are adjacent to one another via the partition walls 5". "The cells 4 positioned at both the ends of the unit cell 44 are positioned in the outermost periphery of the honeycomb structure 103" means that the cells 4 positioned at both the ends of the unit cell 44 are partitioned by walls including an outer peripheral wall 7.

In an exhaust gas purification device including the honeycomb structure 103, it is possible to prevent the increase of a pressure loss. Specifically, in the exhaust gas purification device, when a particulate matter such as ash is deposited on an exhaust gas inflow end surface of the honeycomb structure, openings of the cells are not easily closed with the accumulated ash which overflows on a flow-through cell side, and it is possible to prevent the increase of the pressure loss. Specifically, in an exhaust gas purification device including a plurality of honeycomb structures 103, unevenness is generated in a surface region of each of the unit cells 44 (part of each end surface of the honeycomb structure). Therefore, an amount of ash which overflows to the outside through the surface region of the unit cell 44 decreases. Specifically, the unit cell is not simply formed of a single plugging material, and hence the unevenness is generated in the surface region of the unit cell 44. The ash is easily deposited on the surface region. That is, a slight error is present in the amount of the plugging material with which the cells 4 constituting the unit cell 44 are charged, and hence microscopically, surface heights of the plugged portions 8 are not constant. Therefore, the unevenness is generated in the surface region of the unit cell 44, and the ash is easily deposited on the surface region. Furthermore, the partition walls are present in the center of the surface region, and hence the surface region is recessed toward the center. The ash is easily deposited on the surface region (especially the center). Therefore, the amount of the ash which overflows to the outside through the surface region of the unit cell 44 decreases. In consequence, it is possible to further suitably prevent the closing of open frontal areas. Moreover, the plugged cells 4a are arranged to linearly form the column. Therefore, as compared with a case where the adjacent cells are alternately provided with the plugged portions as in the honeycomb structure shown in Fig. 3, the plugged portions are easily arranged. Therefore, during manufacturing, a plugging step can be simplified, and manufacturing cost can be decreased.

Depths of the plugged portions 8 are preferably from 1 to 10 mm, and further preferably from 2 to 5 mm. Here, the depth of each of the plugged portions 8 means a length of the plugged portion 8 in an extending direction of the cells 4. A material of the plugged portions 8 is preferably the same as that of the partition walls 5.
[1-2] Catalyst:
   A catalyst is preferably loaded onto the partition walls 5 of the honeycomb structure 100. The catalyst to be loaded can suitably be determined in accordance with a purpose. Examples of the catalyst include a ternary catalyst, an oxidation catalyst, an NOₓ selective reduction catalyst, and NOₓ adsorber reduction catalyst. An amount of the catalyst to be loaded per unit volume is preferably from 10 to 60 g/liter, and further preferably from 15 to 30 g/liter.

The ternary catalyst is a catalyst which mainly purifies hydrocarbon (HC), carbon monoxide (CO) and nitrogen oxides (NOₓ). Examples of the catalyst include a catalyst containing, for example, platinum (Pt), palladium (Pd) and rhodium (Rh). Through this ternary catalyst, hydrocarbon is purified into water and carbon dioxide, carbon monoxide is purified into carbon dioxide, and nitrogen oxide is purified into nitrogen, respectively, by oxidation or reduction.

An amount of the ternary catalyst to be loaded onto the partition walls 5 per unit volume is preferably from 60 g/liter or smaller, and further preferably from 20 to 60 g/liter.

Examples of the oxidation catalyst can include a catalyst containing a noble metal. Specifically, the oxidation catalyst preferably contains at least one selected from the group consisting of Pt, Rh and Pd. A total amount of the noble metals is preferably from 0.1 to 3 g/liter per unit volume of the honeycomb structure 100.

Examples of the NOₓ selective reduction catalyst can preferably include a catalyst containing at least one selected from the group consisting of metal-substituted zeolite, vanadium, titania, tungsten oxide, silver, and alumina.

Examples of the NOₓ adsorber reduction catalyst can include an alkali metal and/or an alkali earth metal. Examples of the alkali metal can include K, Na, and Li. Examples of the alkali earth metal can include Ca. A total amount of K, Na, Li and Ca is preferably from 0.1 to 3 g/liter per unit volume of the honeycomb structure 100.
[2] Manufacturing Method of Honeycomb Structure:
   First, a forming raw material is kneaded to obtain a kneaded clay. Next, the obtained kneaded clay is extruded into a honeycomb shape to obtain a honeycomb formed article. Open frontal areas of part of cells in one end surface (an inflow end surface) of the obtained honeycomb formed article are plugged, followed by firing. A honeycomb structure can be prepared in this manner. When the honeycomb structure onto which a catalyst is loaded is prepared, the catalyst is preferably loaded after the firing.

The forming raw material is preferably obtained by adding a dispersion medium and an additive to a ceramic raw material, and examples of the additive can include an organic binder, a pore former, and a surfactant. Examples of the dispersion medium can include water.

The ceramic raw material is preferably at least one selected from the group consisting of silicon carbide, a silicon-silicon carbide composite material, a cordierite forming raw material, mullite, alumina, spinel, a silicon carbide-cordierite composite material, lithium aluminum silicate, and aluminum titanate. Among these materials, the cordierite forming raw material is preferable because the material has a small thermal expansion coefficient and is excellent in thermal shock resistance.

Examples of the organic binder can include methylcellulose, hydroxypropoxyl cellulose, hydroxyethylcellulose, carboxymethylcellulose, and polyvinyl alcohol. Among these materials, methylcellulose and hydroxypropoxyl cellulose are preferably used together. A content of the organic binder is preferably from 0.2 to 2 parts by mass with respect to 100 parts by mass of the ceramic raw material.

There is not any special restriction on the pore former as long as pores are formed after the firing. Examples of the pore former can include a starch, a resin balloon, a water-absorbing resin, and a silica gel. A content of the pore former is preferably from 5 to 15 parts by mass with respect to 100 parts by mass of the ceramic raw material.

As the surfactant, ethylene glycol, dextrin, fatty acid soap, polyalcohol or the like can be used. One of these surfactants may be used alone, or a combination of two or more of them may be used. A content of the surfactant is preferably from 0.1 to 2 parts by mass with respect to 100 parts by mass of the ceramic raw material.

A content of the dispersion medium is preferably from 10 to 30 parts by mass with respect to 100 parts by mass of the ceramic raw material.

A porous base material having a desirable porosity and average pore diameter can be obtained by regulating particle diameters and a blend amount of the ceramic raw material (aggregate particles) for use, and particle diameters and a blend amount of the pore former to be added.

There is not any special restriction on a method of kneading the forming raw material to form the kneaded clay. Examples of the method can include a method using, for example, a kneader, a vacuum clay kneader or the like. The extrusion forming can be performed by using a die having a desirable cell shape, partition wall thickness and cell density. As a material of the die, a hard metal which does not easily wear is preferable.

Examples of a method of plugging open frontal areas of cells can include a method of charging the open frontal areas of the cells with a plugging material. As the method of charging the areas with the plugging material, a heretofore known method can suitably be employed.

For example, the open frontal areas of the cells of the honeycomb formed article can be charged with the plugging material as follows. First, a mask is attached to one end surface (the end surface which becomes the inflow end surface) of the honeycomb formed article. Next, holes are made in portions of the mask which close the predetermined cells by known means such as laser (e.g., as shown in Fig. 2, four cells of two columns and two rows constitute a unit cell, and the unit cells can alternately be provided with the holes). Next, an end of the honeycomb formed article to which the mask is attached is immersed into a plugging slurry containing the cordierite forming raw material, to charge one end of each predetermined cell with the plugging slurry. It is to be noted that the cordierite forming raw material is formed by blending components so as to obtain a theoretical composition of cordierite crystals. Specifically, a silica source component, a magnesia source component, an alumina source component and the like are blended.

A firing temperature can suitably be determined in accordance with the material of the honeycomb formed article. When the material of the honeycomb formed article is cordierite, the firing temperature is preferably from 1380 to 1450°C, and further preferably from 1400 to 1440°C. Moreover, a firing time is preferably from about three to ten hours.

The honeycomb formed article may be dried before fired. There is not any special restriction on a drying method, but examples of the method can include hot air drying, microwave drying, dielectric drying, reduced pressure drying, vacuum drying, and freeze-drying. Among these methods, the dielectric drying, the microwave drying or the hot air drying is preferably performed alone or as a combination of them. Moreover, as drying conditions, a drying temperature is preferably from 30 to 150°C, and a drying time is preferably from one minute to two hours.

It is to be noted that the honeycomb formed article may be fired to obtain a honeycomb fired article prior to charging the open frontal areas of the cells of the honeycomb formed article with the plugging material. As to the honeycomb fired article obtained in this manner, the ends of the predetermined cells on the side of the one end surface (the end surface which becomes the inflow end surface) are charged with the plugging material, followed by the firing, so that the honeycomb structure can be obtained.

As a method of loading the catalyst onto the partition walls of the honeycomb structure, a heretofore known method can suitably be employed. Examples of the method can include a method of coating the partition walls of the honeycomb structure with a catalyst slurry, and performing the drying and backing. As a method of coating the walls with the catalyst slurry, a heretofore known method can be employed. For example, the method can be performed as follows. First, the catalyst slurry containing the catalyst is prepared. Afterward, the prepared catalyst slurry is allowed to flow into the cells by dipping or suction. The whole surfaces of the partition walls of the cells are preferably coated with this catalyst slurry. Then, after the catalyst slurry flows into the cells, an excessive slurry is blown and flied by compressed air. Afterward, the catalyst slurry is dried and baked, so that it is possible to obtain the honeycomb structure in which the catalyst is loaded onto the surfaces of the partition walls of the cells. The drying conditions are preferably set to 80 to 150°C and one to six hours. Moreover, backing conditions are preferably set to 450 to 700°C and 0.5 to six hours. It is to be noted that examples of a component other than the catalyst contained in the catalyst slurry include alumina.

### [3] Exhaust Gas Purification Device:

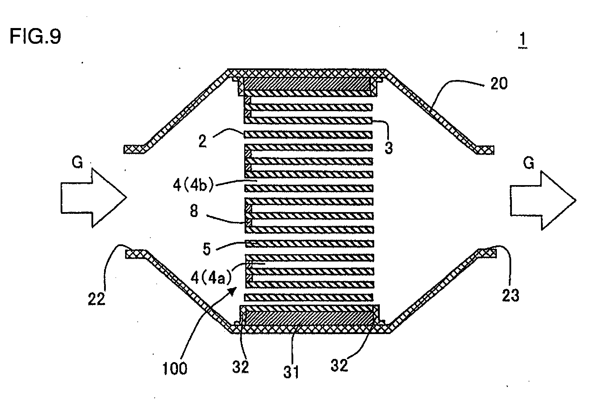

In an embodiment of the exhaust gas purification device of the present invention, an exhaust gas purification device 1 shown in Fig. 9 includes a honeycomb structure 100 in which among cells 4 adjacent to each of flow-through cells 4b via partition walls 5, plugged cells 4a are two or less cells; and a can member 20 in which the honeycomb structure 100 is put. The honeycomb structure 100 includes the porous partition walls 5 arranged to partition the plurality of cells 4 which extend through the structure from an inflow end surface 2 as the end surface on an inflow side of a fluid (an exhaust gas G) to an outflow end surface 3 as the end surface on an outflow side of the fluid to become through channels of the fluid and in which a shape of outer peripheral edges of open frontal areas in the inflow end surface 2 is a quadrangular shape. Moreover, the honeycomb structure 100 includes plugged cells 4a as the cells 4 which are provided with plugged portions 8 at ends thereof on the side of the inflow end surface 2 and flow-through cells 4b as the cells 4 which are not provided with the plugged portions 8. The can member 20 is provided with an inflow port 22 through which the fluid flows into the structure and an outflow port 23 through which the fluid flows out of the structure, and in the can member, the honeycomb structure 100 is put in a state where the inflow end surface 2 of the structure faces the side of the inflow port 22 and the outflow end surface 3 thereof faces the side of the outflow port 23.

In the exhaust gas purification device 1, the honeycomb structure 100 is put in the can member 20 "in a state where the inflow port 22 through which the fluid flows into the structure and the outflow port 23 through which the fluid flows out of the structure are formed, and the inflow end surface 2 faces the side of the inflow port 22 and the outflow end surface 3 faces the side of the outflow port 23". Therefore, when the exhaust gas passes through the honeycomb structure 100 (specifically, when the fluid flows from the flow-through cells 4b to the plugged cells 4a), the partition walls 5 become the filter to suitably remove (collect) a particulate matter contained in the exhaust gas. As described above, it is possible to suitably remove the particulate matter contained in the exhaust gas. Moreover, the flow-through cells 4b are formed. Therefore, the pressure loss increases less. Furthermore, in the honeycomb structure 100 of the exhaust gas purification device 1, the flow-through cells 4b are not easily closed with the particulate matter deposited on the inflow end surface 2. Therefore, in the exhaust gas purification device 1, it is possible to maintain a suitable collecting efficiency of the particulate matter in the exhaust gas for a long period of time.

In the exhaust gas purification device 1 shown in Fig. 9, a cushion material 31 constituted of a heatresisting inorganic insulating mat or the like is wound around an outer periphery of the honeycomb structure 100. When the cushion material 31 is wound, the honeycomb structure 100 can be prevented from moving in the can member 20, and the honeycomb structure 100 can be prevented from being damaged. Moreover, in the exhaust gas purification device 1 shown in Fig. 9, the honeycomb structure 100 is put in the can member 20 in a state where both end surfaces of the honeycomb structure are fixed with fasteners 32. The fasteners 32 may have a ring-like shape obtained by removing the center of a flat plate, or such a plate-like shape as to fasten part of outer edges of the end surfaces of the honeycomb structure 100. A material of the fasteners 32 may be a ceramic or a metal such as a stainless steel or an iron steel.

### [3-1] Honeycomb Structure:

The exhaust gas purification device of the present invention includes the above-mentioned honeycomb structure of the present invention. The exhaust gas purification device of the present invention may include only one honeycomb structure or a plurality of honeycomb structures. When the device includes the plurality of honeycomb structures, the number of the honeycomb structures can suitably be determined so that the collecting efficiency of the particulate matter, the pressure loss and the like have desired values, or in accordance with a degree of a discharge regulation on the particulate matter in the exhaust gas. However, the number is preferably two or three.

Moreover, when the device includes the plurality of honeycomb structures, all the structures are preferably arranged so that "the inflow end surfaces 2 face the inflow port 22 side of the can member 20 and the outflow end surfaces 3 face the outflow port 23 side of the can member 20". Furthermore, diameters of the respective honeycomb structures in "a cross section orthogonal to a cell extending direction" are preferably the same, but the honeycomb structures may have different diameters in "the cross section orthogonal to the cell extending direction".

When the device includes the plurality of honeycomb structures, the adjacent honeycomb structures are preferably arranged via a space of 1 to 50 mm, further preferably arranged via a space of 5 to 30 mm, and especially preferably arranged via a space of 10 to 25 mm. When the space between the adjacent honeycomb structures is in the above range, it is possible to prevent a temperature of the exhaust gas from lowering between the adjacent honeycomb structures. It is possible to promote the burning of the particulate matter deposited in the honeycomb structure positioned on a downstream side. Therefore, it is possible to prevent the increase of the pressure loss due to the deposited particulate matter. Here, when the space is smaller than 1 mm, the honeycomb structures come in contact with each other owing to vibration. Therefore, the structures are damaged sometimes. On the other hand, when the space exceeds 50 mm, the temperature of the exhaust gas between the adjacent honeycomb structures lowers noticeably. The burning of a particulate matter such as soot deposited in the honeycomb structure positioned on the downstream side is disturbed (is not sufficiently performed). Therefore, the pressure loss might increase.

When the exhaust gas purification device of the present invention includes the plurality of honeycomb structures (having the same constitution), a maximum diameter K0 of the honeycomb structures and a minimum diameter K1 of an opening of the can member preferably satisfy a formula: (the opening minimum diameter K1/the maximum diameter K0)×100 ≥ 80. "The opening minimum diameter K1" is the minimum value K1 of the opening diameter of a portion positioned between the end surfaces of the adjacent honeycomb structures which face each other. Moreover, a formula: 80 ≤ (the opening minimum diameter K1/the maximum diameter K0)×100 ≤ 110 is further preferably satisfied, and a formula: 90 ≤ (the opening minimum diameter K1/the maximum diameter K0)×100 ≤ 105 is especially preferably satisfied. When the opening minimum diameter K1 and the maximum diameter K0 satisfy the above formula, it is possible to suppress the occurrence of a turbulence in the exhaust gas. Therefore, the evaluation result of the pressure loss becomes suitable. Here, when the above formula is not satisfied, the turbulence of the exhaust gas becomes excessively large, and the pressure loss increases between the end surfaces of the adjacent honeycomb structures which face each other. In consequence, the pressure loss of the whole exhaust gas purification device increases.

It is to be noted that when the device includes the plurality of honeycomb structures, the constitutions of the honeycomb structures (especially, an arrangement pattern of the plugged portions) may be the same or different. That is, when, for example, two honeycomb structures are used, both the honeycomb structures may be the honeycomb structure 100 shown in Fig. 1. Moreover, the one honeycomb structure may be the honeycomb structure 100 shown in Fig. 1, and the other honeycomb structure may be the honeycomb structure 101 shown in Fig. 7. Among these constitutions, from the viewpoint that an effect of the lowering of manufacturing cost can be obtained, the constitutions of the respective honeycomb structures (especially, the arrangement pattern of the plugged portions) are preferably the same.

### [3-2] Can Member:

The can member 20 is a tubular structure including the inflow port 22 through which the exhaust gas flows into the structure and the outflow port 23 through which the purified exhaust gas flows out of the structure. There is not any special restriction on the can member 20 as long as the can member has the above constitution. A can member usually for use in putting therein a honeycomb filter for purifying an exhaust gas such as an automobile exhaust gas can be used.

Examples of a material of the can member 20 can include a metal such as stainless steel. A size of the can member 20 is preferably such a size that the honeycomb structure 100 around which the cushion material 31 is wound can be pressed, under pressure, into the can member. As shown in Fig. 9, both ends of the can member 20 having a tubular shape become thin in a taper-like shape, and each of opening diameters of the inflow port 22 and the outflow port 23 is preferably smaller than an inner diameter of each port at a midpoint of a length of the port in a fluid flowing direction. Specifically, the inner diameter is preferably from 80 to 100 mm. Moreover, the opening diameter of the inflow port of the can member is preferably from 30 to 60 mm, and the opening diameter of the outflow port is preferably from 30 to 60 mm. The length of the can member in the fluid flowing direction is preferably from 100 to 300 mm.

The can member 20 can be prepared by a heretofore known method. For example, when a plate material made of ferrite stainless steel is press-processed and welded, the can member can be prepared. A shape, a size and the like of the can member can suitably be set in accordance with a size of the honeycomb structure or a use application of the exhaust gas purification device.

### [4] Manufacturing Method of Exhaust Gas Purification Device:

A manufacturing method of the exhaust gas purification device of the present invention will specifically be described with respect to a method of manufacturing the exhaust gas purification device 1 shown in Fig. 9.

First, there is prepared the can member 20 provided with the inflow port 22 through which the fluid flows into the member and the outflow port 23 through which the fluid flow out of the member, and including the fasteners 32 which are fixed to the inner peripheral surface of the can member to regulate the movement of the honeycomb structure 100. Next, the cushion material 31 is wound around the outer periphery of the honeycomb structure 100. While placing, under pressure, the honeycomb structure 100, around which the cushion material 31 is wound, into the can member 20, the honeycomb structure is disposed at a predetermined position and fastened thereto with the fasteners 32. In consequence, the exhaust gas purification device 1 can be obtained.

### Examples

Hereinafter, the present invention will specifically be described with respect to examples, but the present invention is not limited to these examples.

### (Example 1)

### [Preparation of Honeycomb Structure]

As a cordierite forming raw material, alumina, aluminum hydroxide, kaolin, talc and silica were used. To 100 parts by mass of this cordierite forming raw material, there were added 10 parts by mass of pore former, 20 parts by mass of dispersion medium, 1 part by mass of organic binder and 0.5 part by mass of dispersant, respectively, followed by mixing and kneading, to prepare a kneaded clay. Water was used as the dispersion medium, cokes having an average particle diameter of 10 to 50 μm were used as the pore former, hydroxypropyl methylcellulose was used as the organic binder, and ethylene glycol was used as the dispersant.

Next, the kneaded clay was extruded by using a predetermined die, to obtain a honeycomb formed article having a quadrangular cell shape (quadrangular cells in a cross section orthogonal to a cell extending direction) and having a columnar shape (a cylindrical shape) as a whole. Then, the honeycomb formed article was dried with a microwave dryer, and further completely dried with a hot air dryer. Afterward, both end surfaces of the honeycomb formed article were cut, and adjusted to a predetermined dimension. Next, a mask was attached to one end surface (the end surface which becomes an inflow end surface) of the honeycomb formed article. At this time, cell openings were all closed with the mask. Next, holes were made in portions of the mask which close predetermined cells by laser (specifically, four cells of two columns and two rows constituted a unit cell, and the holes were alternately formed in adjacent unit cells as shown in Fig. 2). An end of the article to which the mask was attached was immersed into a plugging slurry containing the above cordierite forming raw material, and one end of each of the predetermined cells was charged with the plugging slurry.

Afterward, the honeycomb formed article in which the one end of each predetermined cell was charged with the plugging slurry was dried with a hot air dryer, and further fired at 1410 to 1440°C for five hours, to obtain a honeycomb fired article.

Next, mixture particles (a specific surface area of 50 m²/g) of γAl₂O₃ having an average particle diameter of 100 μm and CeO₂ having an average particle diameter of 100 μm were wet-ground in a ball mill, to obtain the ground particles including pores and having an average particle diameter of 5 μm. The obtained ground particles were immersed into a solution containing Pt and Rh to load Pt and Rh onto the pores of the ground particles. Afterward, an acetic acid and water were added to the ground particles onto which Pt and Rh were loaded, to obtain a coating slurry. Then, the prepared honeycomb fired article was immersed into this coating slurry. In consequence, the surfaces of partition walls of the honeycomb fired article and pore surfaces of the partition walls were coated with a catalyst to form a catalyst layer. Afterward, the article was dried and further fired at 600°C for three hours to obtain a honeycomb structure.

The obtained honeycomb structure had a diameter of 110 mm and a length of 120 mm in a central axis direction. In the obtained honeycomb structure, a value (L/D) of a length L in the central axis direction to a diameter D of the inflow end surface of the honeycomb structure was 1.09. In the obtained honeycomb structure, a cell density was 62.0 cells/cm², a partition wall thickness was 0.076 mm, a partition wall porosity was 40.0%, and a partition wall average pore diameter was 30 μm. In the honeycomb structure of the present example, the only ends of plugged cells on the side of an inflow end surface 2 were provided with plugged portions 8, and the ends of the plugged cells on an outflow end surface 3 side were not provided with the plugged portions 8, as in a honeycomb structure 100 shown in Fig. 5. Moreover, when four cells of two columns and two rows which were adjacent to one another constituted one unit cell, the plugged portions were alternately arranged in the adjacent unit cells as in the honeycomb structure 100 shown in Fig. 1 and Fig. 2. It is to be noted that an amount of a catalyst (oxides (γAl₂O₃ and CeO₂) to be loaded onto the honeycomb structure was 20 g/liter, and an amount of a noble metal to be loaded was 0.5 g/liter. Moreover, an average pore diameter of a catalyst layer was 5 μm, which was the same as that of ground particles. The measurement results are shown in Table 1.

**[Table 1]**

| | Honeycomb structure | | | | | | | | |
|---|---|---|---|---|---|---|---|---|---|
| | Diameter | Length | L/D | Cell density | Partition wall thickness | Porosity | Average pore diameter | Catalyst coat amount | Noble metal amount |
| | (mm) | (mm) | | (cells/cm²) | (mm) | (%) | (μm) | (g/L) | (g/L) |
| Example 1 | 110 | 120 | 1.09 | 62.0 | 0.076 | 40.0 | 30 | 20 | 0.5 |
| Example 2 | 110 | 120 | 1.09 | 62.0 | 0.076 | 40.0 | 7 | 0 | 0 |
| Example 3 | 110 | 120 | 1.09 | 62.0 | 0.076 | 40.0 | 10 | 20 | 0.5 |
| Example 4 | 110 | 120 | 1.09 | 62.0 | 0.076 | 40.0 | 15 | 0 | 0 |
| Example 5 | 110 | 100 | 0.91 | 62.0 | 0.076 | 40.0 | 20 | 20 | 0.5 |
| Example 6 | 110 | 60 | 0.55 | 62.0 | 0.076 | 40.0 | 30 | 0 | 0 |
| Example 7 | 110 | 120 | 1.09 | 62.0 | 0.076 | 40.0 | 7 | 0 | 0 |
| Example 8 | 110 | 120 | 1.09 | 42.0 | 0.076 | 40.0 | 30 | 20 | 0.5 |
| Example 9 | 110 | 120 | 1.09 | 62.0 | 0.076 | 40.0 | 7 | 0 | 0 |
| Example 10 | 110 | 120 | 1.09 | 92.0 | 0.076 | 40.0 | 30 | 20 | 0.5 |
| Example 11 | 110 | 60 | 0.55 | 92.0 | 0.100 | 40.0 | 30 | 20 | 0.5 |
| Example 12 | 100 | 60 | 0.60 | 92.0 | 0.120 | 40.0 | 30 | 20 | 0.5 |
| Example 13 | 90 | 60 | 0.67 | 92.0 | 0.170 | 40.0 | 30 | 20 | 0.5 |
| Example 14 | 120 | 60 | 0.50 | 92.0 | 0.076 | 40.0 | 30 | 20 | 0.5 |
| Example 15 | 110 | 120 | 1.09 | 62.0 | 0.076 | 35.0 | 30 | 20 | 0.5 |
| Example 16 | 110 | 120 | 1.09 | 62.0 | 0.076 | 38.0 | 30 | 20 | 0.5 |
| Example 17 | 110 | 120 | 1.09 | 62.0 | 0.076 | 44.0 | 30 | 20 | 0.5 |
| Example 18 | 110 | 60 | 0.55 | 62.0 | 0.076 | 35.0 | 30 | 20 | 0.5 |
| Example 19 | 110 | 60 | 0.55 | 62.0 | 0.076 | 38.0 | 30 | 20 | 0.5 |
| Example 20 | 110 | 60 | 0.55 | 62.0 | 0.076 | 44.0 | 30 | 20 | 0.5 |
| Comparative Example 1 | 110 | 60 | 0.55 | 62.0 | 0.076 | 40.0 | 10 | 0 | 0 |
| Comparative Example 2 | 110 | 120 | 1.09 | 62.0 | 0.076 | 40.0 | 10 | 20 | 0.5 |
| Comparative Example 3 | 110 | 120 | 1.09 | 62.0 | 0.076 | 40.0 | 10 | 0 | 0 |
| Comparative Example 4 | 110 | 120 | 1.09 | 62.0 | 0.076 | 40.0 | 7 | 20 | 0.5 |
| Comparative Example 5 | 110 | 120 | 1.09 | 62.0 | 0.076 | 40.0 | 10 | 0 | 0 |
| Comparative Example 6 | 110 | 120 | 1.09 | 62.0 | 0.076 | 40.0 | 15 | 20 | 0.5 |
| Comparative Example 7 | 110 | 120 | 1.09 | 62.0 | 0.076 | 40.0 | 20 | 0 | 0 |
| Comparative Example 8 | 110 | 120 | 1.09 | 62.0 | 0.076 | 40.0 | 30 | 20 | 0.5 |
| Comparative Example 9 | 110 | 120 | 1.09 | 62.0 | 0.076 | 40.0 | 30 | 0 | 0 |
| Comparative Example 10 | 110 | 60 | 0.55 | 62.0 | 0.076 | 40.0 | 7 | 20 | 0.5 |
| Comparative Example 11 | 110 | 60 | 0.55 | 92.0 | 0.076 | 40.0 | 30 | 0 | 0 |

### [Preparation of Exhaust Gas Purification Device]

Next, in a can member made of a metal (specifically, made of stainless steel) and including an inflow port and an outflow port, the prepared honeycomb structure was put in a state where the inflow end surface faced an inflow port side and the outflow end surface faced an outflow port side. When the honeycomb structure was put, the outer periphery of the honeycomb structure was covered with a mat made of a ceramic fiber as a main component. In this state, the honeycomb structure was put, under pressure, in the can member and fixed thereto. In consequence, an exhaust gas purification device was prepared.

As the can member, there was used a can member in which both the ends of a tubular shape became thin in a tapered shape. Specifically, as to the can member used in the present example, an opening diameter of the inflow port was 50 mm, an opening diameter of the outflow port was 50 mm, and a length of the member in a fluid flowing direction was 150 mm.

As to the prepared exhaust gas purification device, evaluations of "ash clogging during long operation", "PM discharge", "a pressure loss" and "overall evaluation" were performed. Hereinafter, evaluation methods of the evaluations will be described.

### [Evaluation Method of Ash Clogging During Operation for a Long Period of Time]

The exhaust gas purification device was attached to an exhaust path of a direct-injection gasoline engine with a displacement of 2.0 liters so that an exhaust gas flowed into the device through the inflow port of the can member. Afterward, by an engine bench test, an operation was performed for 500 hours on operation conditions simulating an European regulation operation mode. It is to be noted that an initial pressure loss was measured during the above operation. Then, a pressure loss after the operation for 500 hours was measured, to perform an evaluation from a relation between the pressure loss and the initial pressure loss. As evaluation references, when the pressure loss after the operation for 500 hours was twice or less the initial pressure loss, the result was pass "A". In excess of twice, the result was failure "B". It is to be noted that in Table 2, the present evaluation is shown as "ash clogging".

### [Evaluation Method of PM Discharge]

The exhaust gas purification device was attached to an exhaust path of a passenger car on which the direct-injection gasoline engine with the displacement of 2.0 liters was mounted so that the exhaust gas flowed into the device through the inflow port of the can member. Afterward, as a vehicle test by a chassis dynamo, the number of PMs to be discharged in the exhaust gas was measured and evaluated by a method in conformity to European Euro6 proposed regulation, when the operation was performed on the operation conditions of the European regulation operation mode. When the number of the PMs to be discharged was 6×10¹¹ PMs/km or smaller, the conditions of European Euro6 proposed regulation were satisfied. Therefore, the result was the pass "A". In the case of the number of the PMs to be discharged in excess of 6×10¹¹ PMs/km, the result was the failure "B". It is to be noted that in Table 2, the present evaluation is shown as "PM discharge (PMs/km)".

### [Evaluation Method of Pressure Loss]

The pressure loss was evaluated in the bench test of the direct-injection gasoline engine with the displacement of 2.0 liters. Specifically, to the exhaust path of the above engine, there was attached a purification device including a flow-through type honeycomb structure (the honeycomb structure which was not provided with any plugged portions) having a cell density of 93 cells/cm², a partition wall thickness of 0.076 mm, a diameter of 105.7 mm, and a length of 114 mm in a longitudinal direction. Then, a pressure loss during an engine full load operation in this honeycomb structure was measured, and obtained as a reference value. Next, in place of the purification device including the above honeycomb structure, the exhaust gas purification device of the present example was attached to the above exhaust path of the direct-injection gasoline engine with the displacement of 2.0 liters so that the exhaust gas flowed into the device through the inflow port of the can member. Afterward, the pressure loss was measured as a test value on the above engine full load conditions. Then, a pressure loss increase amount (the test value - the reference value) was calculated. When the pressure loss increase amount was smaller than 10 kPa, the result was the pass "A". When the pressure loss increase amount was 10 kPa or larger, the result was the failure "B".

### [Evaluation Method of overall evaluation]

Among the above evaluations of [ash clogging during long operation], [PM discharge] and [pressure loss], when all the evaluations resulted in the pass "A", the result was "A". When the evaluation of even one failure "B" was present, the result was the failure "B".

The results of the evaluations ([ash clogging during long operation], [PM discharge], [pressure loss] and [overall evaluation]) in the present example are shown in Table 2.

In Table 2, "the positions of the plugged portions" indicate the ends provided with the plugged portions, "upstream one side" means that the plugged portions were formed only at the ends on the inflow end surface side, and "both the ends" means that the plugged portions were formed at both the ends on the inflow end surface side and the outflow end surface side. "A configuration of the plugged portions" indicates a plugged portion forming pattern, and "4-cell zigzag" means that four cells of two columns and two rows constitute a unit cell and that the plugged portions are formed to alternately close the open frontal areas of the cells every unit cell (see Fig. 2). "9-cell zigzag" means that nine cells of three columns and three rows constitute a unit cell and that the plugged portions are formed to alternately close the open frontal areas of the cells every unit cell. "Every other column" means that when a plurality of cells adjacent via partition walls constitute a unit cell, the plugged portions are alternately arranged every adjacent unit cell, and the plugged portions are formed so that the unit cell includes all the cells of one column (see Fig. 7). "Every 2 columns" means that when a plurality of cells adjacent via partition walls constitute a unit cell, the plugged portions are alternately arranged every adjacent unit cell, and the plugged portions are formed so that the unit cell includes all the cells of two adjacent columns (see Fig. 8). The "zigzag" means that the plugged portions are formed so that the plugged portions are alternately arranged every adjacent cell (see Fig. 3).

**[Table 2]**

| | Honeycomb structure | | Evaluation result | | | | Overall evaluation |
|---|---|---|---|---|---|---|---|
| | Position of plugged portion | Configuration of plugged portion | Ash clogging | PM discharge (PMs/km) | | Pressure loss | |
| | | | | (PMs/km) | Evaluation | | |
| Example 1 | Upstream one side | 4-cell zigzag | A | 0.10 × 10¹¹ | A | A | A |
| Example 2 | Upstream one side | 4-cell zigzag | A | 0.09 × 10¹¹ | A | A | A |
| Example 3 | Upstream one side | 9-cell zigzag | A | 0.07 × 10¹¹ | A | A | A |
| Example 4 | Upstream one side | 4-cell zigzag | A | 0.08 × 10¹¹ | A | A | A |
| Example 5 | Upstream one side | 4-cell zigzag | A | 0.10 × 10¹¹ | A | A | A |
| Example 6 | Upstream one side | 4-cell zigzag | A | 0.10 × 10¹¹ | A | A | A |
| Example 7 | Upstream one side | Every other column | A | 0.20 × 10¹¹ | A | A | A |
| Example 8 | Upstream one side | Every other column | A | 0.20 × 10¹¹ | A | A | A |
| Example 9 | Upstream one side | Every 2 columns | A | 0.20 × 10¹¹ | A | A | A |
| Example 10 | Upstream one side | Every 2 columns | A | 0.20 × 10¹¹ | A | A | A |
| Example 11 | Upstream one side | 4-cell zigzag | A | 0.10 × 10¹¹ | A | A | A |
| Example 12 | Upstream one side | 4-cell zigzag | A | 0.10 × 10¹¹ | A | A | A |
| Example 13 | Upstream one side | 4-cell zigzag | A | 0.10 × 10¹¹ | A | A | A |
| Example 14 | Upstream one side | 4-cell zigzag | A | 0.10 × 10¹¹ | A | A | A |
| Example 15 | Upstream one side | 4-cell zigzag | A | 0.10 × 10¹¹ | A | A | A |
| Example 16 | Upstream one side | 4-cell zigzag | A | 0.10 × 10¹¹ | A | A | A |
| Example 17 | Upstream one side | 4-cell zigzag | A | 0.10 × 10¹¹ | A | A | A |
| Example 18 | Upstream one side | 4-cell zigzag | A | 0.10 × 10¹¹ | A | A | A |
| Example 19 | Upstream one side | 4-cell zigzag | A | 0.10 × 10¹¹ | A | A | A |
| Example 20 | Upstream one side | 4-cell zigzag | A | 0.10 × 10¹¹ | A | A | A |
| Comparative Example 1 | Both ends | Zigzag | B | 0.30 × 10¹¹ | A | B | B |
| Comparative Example 2 | Both ends | Zigzag | B | 0.10 × 10¹¹ | A | B | B |
| Comparative Example 3 | Both ends | Zigzag | B | 0.10 × 10¹¹ | A | B | B |
| Comparative Example 4 | Upstream one side | Zigzag | B | 0.20 × 10¹¹ | A | A | B |
| Comparative Example 5 | Upstream one side | Zigzag | B | 0.07 × 10¹¹ | A | A | B |
| Comparative Example 6 | Upstream one side | Zigzag | B | 0.09 × 10¹¹ | A | A | B |
| Comparative Example 7 | Upstream one side | Zigzag | B | 0.095 × 10¹¹ | A | A | B |
| Comparative Example 8 | Upstream one side | Zigzag | B | 0.10 × 10¹¹ | A | A | B |
| Comparative Example 9 | Upstream one side | Zigzag | B | 0.10 × 10¹¹ | A | A | B |
| Comparative Example 10 | Upstream one side | Zigzag | B | 0.20 × 10¹¹ | A | A | B |
| Comparative Example 11 | Upstream one side | Zigzag | B | 0.15 × 10¹¹ | A | A | B |

### (Examples 2 to 20 and Comparative Examples 1 to 11)

Honeycomb structures were prepared in the same manner as in Example 1 except that there were used the honeycomb structures which satisfied diameters, lengths in a central axis direction, L/D, cell densities, partition wall thicknesses, partition wall porosities, partition wall average pore diameters, catalyst loading amounts and noble metal loading amounts shown in Table 1 and which satisfied positions of plugged portions and configurations of the plugged portions shown in Table 2. Afterward, the prepared honeycomb structures were put in a can member similar to the can member used in Example 1, respectively, to prepare exhaust gas purification devices. Afterward, evaluations of [ash clogging during long operation], [PM discharge], [pressure loss] and [overall evaluation] were performed in the same manner as in Example 1. Results are shown in Table 2.

As apparent from Table 2, it is possible to confirm that the honeycomb structures of Examples 1 to 20 can suitably remove the particulate matter contained in the exhaust gas discharged from the direct-injection gasoline engine as compared with the honeycomb structures of Comparative Examples 1 to 11. It is also possible to confirm that in the honeycomb structures of Examples 1 to 20, the pressure loss increases less when the particulate matter in the exhaust gas is removed and that a suitable collecting efficiency of the particulate matter contained in the exhaust gas can be maintained for a long period of time, as compared with the honeycomb structures of Comparative Examples 1 to 11.

### Industrial Applicability

A honeycomb structure of the present invention can suitably be used for the purification of an exhaust gas discharged from a direct-injection gasoline engine. An exhaust gas purification device of the present invention can suitably be used for the purification of the exhaust gas discharged from the direct-injection gasoline engine. Description of Reference Signs

1: exhaust gas purification device, 2 and 12: inflow end surface, 3: outflow end surface, 4: cell, 4a: plugged cell, 4b: flow-through cell, 4c: lacking cells, 5: partition wall, 7: outer peripheral wall, 8: plugged portion, 14, 24a, 24b, 34 and 44: unit cell, 20: can member, 22: inflow port, 23: outflow port, 31: cushion material, 32: fastener, 40: particulate matter, 100, 101, 102, 103 and 200: honeycomb structure, and G: exhaust gas.

## Claims

1. A honeycomb structure comprising:
porous partition walls arranged to partition a plurality of cells which extend through the structure from an inflow end surface as the end surface on a fluid inflow side to an outflow end surface as the end surface on a fluid outflow side to become through channels of the fluid and in which a shape of outer peripheral edges of open frontal areas in the inflow end surface is a quadrangular shape; and
plugged cells as the cells which are provided with plugged portions at ends thereof on the side of the inflow end surface and flow-through cells as the cells which are not provided with the plugged portions,
wherein among the cells adjacent to each of the flow-through cells via the partition walls, two or less cells are the plugged cells.

2. The honeycomb structure according to claim 1,
wherein when the plurality of cells adjacent via the partition walls constitute one unit cell, the plugged portions are alternately arranged in the adjacent unit cells.

3. The honeycomb structure according to claim 2,
wherein the unit cell includes four cells of two columns and two rows which are adjacent to one another.

4. The honeycomb structure according to claim 2,
wherein the unit cell includes all the cells of one column which are adjacent via the partition walls.

5. The honeycomb structure according to claim 2,
wherein the unit cell includes all the cells of a plurality of columns adjacent to one another.

6. An exhaust gas purification device comprising:
the honeycomb structure according to any one of claims 1 to 5; and
a can member provided with an inflow port through which the fluid flows into the can member and an outflow port through which the fluid flows out of the can member and in which the honeycomb structure is put in a state where the inflow end surface of the structure faces the side of the inflow port and the outflow end surface thereof faces the side of the outflow port.

## Patentansprüche

1. Wabenstruktur, umfassend:
poröse Trennwände, die angeordnet sind, um eine Vielzahl an Zellen, die sich von einer Einströmungsendfläche als Endfläche auf einer Fluideinströmungsseite hin zu einer Ausströmungsendfläche als Endfläche auf einer Fluidausströmungsseite durch die Struktur hindurch erstrecken, zu trennen, um zu Durchgangskanälen des Fluids zu werden und in denen eine Form von Außenumfangskanten von offenen Vorderbereichen auf der Einströmungsendfläche quadratisch ist; und
verschlossene Zellen als die Zellen, die mit verschlossenen Abschnitten an Enden davon auf der Seite der Einströmungsendfläche bereitgestellt sind, und Durchströmungszellen als die Zellen, die nicht mit den verschlossenen Abschnitten bereitgestellt sind,
wobei von den zu jeder der Durchströmungszellen über die Trennwände benachbarten Zellen zwei oder weniger Zellen die verschlossenen Zellen sind.

2. Wabenstruktur nach Anspruch 1, wobei wenn die Vielzahl von über die Trennwände benachbarten Zellen eine Zelleinheit bildet, die verschlossenen Abschnitte in den benachbarten Zelleinheiten abwechselnd angeordnet sind.

3. Wabenstruktur nach Anspruch 2, wobei die Zelleinheit vier Zellen von zwei Spalten und zwei Zeilen umfasst, die zueinander benachbart sind.

4. Wabenstruktur nach Anspruch 2, worin die Zelleinheit alle Zellen einer Spalte umfasst, die über die Trennwände zueinander benachbart sind.

5. Wabenstruktur nach Anspruch 2, worin die Zelleinheit alle Zellen einer Vielzahl an Spalten umfasst, die zueinander benachbart sind.

6. Abgasreinigungsvorrichtung, umfassend:
die Wabenstruktur nach einem der Ansprüche 1 bis 5; und
ein Dosenelement, das mit einer Einströmungsöffnung, durch die das Fluid in das Dosenelement einströmt, und einer Ausströmungsöffnung, durch die das Fluid aus dem Dosenelement heraus strömt, bereitgestellt ist, und wobei die Wabenstruktur in einen Zustand versetzt wird, in dem die Einströmungsendfläche der Struktur der Seite der Einströmungsöffnung zugewandt ist und die Ausströmungsendfläche davon der Seite der Ausströmungsöffnung zugewandt ist.

## Revendications

1. Structure en nid d'abeilles comprenant :
des parois de séparation poreuses agencées pour séparer une pluralité de cellules qui s'étendent à travers la structure d'une surface d'extrémité de flux d'entrée en tant que surface d'extrémité d'un côté de flux d'entrée de fluide vers une surface d'extrémité de flux de sortie en tant que surface d'extrémité d'un côté de flux de sortie de fluide pour devenir des canaux traversants du fluide et, dans laquelle une forme des bords périphériques extérieurs des zones frontales ouvertes dans la surface d'extrémité de flux d'entrée est une forme quadrangulaire ; et
des cellules obturées en tant que cellules qui sont pourvues de parties obturées aux extrémités de celles-ci du côté de la surface d'extrémité de flux d'entrée et des cellules traversées par le flux en tant que cellules qui ne sont pas pourvues des parties obturées,
dans laquelle, parmi les cellules adjacentes à chacune des cellules traversées par le flux par l'intermédiaire des parois de séparation, deux des cellules ou moins sont des cellules obturées.

2. Structure en nid d'abeilles selon la revendication 1, dans laquelle, lorsque la pluralité de cellules adjacentes par l'intermédiaire des parois de séparation constituent une cellule d'unité, les parties obturées sont agencées alternativement dans les cellules d'unité adjacentes.

3. Structure en nid d'abeilles selon la revendication 2, dans laquelle la cellule d'unité comprend quatre cellules de deux colonnes et de deux rangées qui sont adjacentes les unes aux autres.

4. Structure en nid d'abeilles selon la revendication 2, dans laquelle la cellule d'unité comprend toutes les cellules d'une colonne qui sont adjacentes par l'intermédiaire des parois de séparation.

5. Structure en nid d'abeilles selon la revendication 2, dans laquelle la cellule d'unité comprend toutes les cellules d'une pluralité de colonnes adjacentes les unes aux autres.

6. Dispositif de purification de gaz d'échappement comprenant :
la structure en nid d'abeilles selon l'une quelconque des revendications 1 à 5 ; et
un élément formant boîte pourvu d'un orifice de flux d'entrée à travers lequel le fluide s'écoule dans l'élément formant boîte et un orifice de flux de sortie à travers lequel le fluide s'écoule hors de l'élément formant boîte, et dans lequel la structure en nid d' abeilles est placée dans un état dans lequel la surface d'extrémité de flux d'entrée de la structure est orientée vers le côté de l'orifice de flux d'entrée et la surface d'extrémité de flux de sortie de celle-ci est orientée vers le côté de l'orifice de flux de sortie.
